# EUROPÄISCHE PATENTSCHRIFT

(11) **EP 0 645 293 B1**
(45) Veröffentlichungstag und Bekanntmachung des Hinweises auf die Patenterteilung: **28.05.1997**
(21) Anmeldenummer: 94112243.4
(22) Anmeldetag: 05.08.1994
(51) Int. Cl.: B61D 3/20, B60P 1/64, B61D 3/04

(54) **Güterwagen zur Bildung eines schienengebundenen Güterzuges für den kombinierten Güterverkehr Schiene/Strasse**
Freight wagon for forming a railway wagon combination for combined rail and road transport
Wagon à marchandises pour former un train de wagons ferroviaires pour transport rail-route

(30) Priorität: 23.09.1993 DE 4332266
(43) Veröffentlichungstag der Anmeldung: 29.03.1995
(73) Patentinhaber: MERCEDES-BENZ AG, 70327 Stuttgart (DE)
(72) Erfinder: Dieterle, Joachim, Dipl.-Ing., D-70565 Stuttgart (DE); Schmitt, Bernhard, Dipl.-Ing., D-69488 Birkenau (DE); Bach, Alexander, Dipl.-Ing., D-64297 Darmstadt (DE); Walz, Reinhold, Dipl.-Ing., D-64380 Rossdorf (DE)

(56) Entgegenhaltungen:
- AT-A- 335 507
- CH-A- 666 452
- DE-A- 4 020 387
- FR-A- 1 293 688
- US-A- 2 959 303

## Beschreibung

Die Erfindung geht aus von einem Güterwagen nach dem Oberbegriff von Anspruch 1, wie er beispielsweise aus der CH-PS 666 452 als bekannt hervorgeht. Ähnliche Güterwagen zeigen auch die AT-PS 335 507 oder die DE 40 20 387 A1.

Bei den aus der AT-PS 335 507 bekannten Güterwagen sind zur Bildung bordeigener Hubmittel symmetrisch zur Längsmittenachse Luftfederbälge am Wagenchassis abgestützt, deren oberes, die zu übernehmenden oder abzusetzenden Wechselaufbauten tragendes Ende aus Gründen einer mechanischen Stabilisierung des Luftfederbalges über eine am Wagenchassis angelenkte Schwinge geführt ist. Zur Übernahme müssen die auf integrierten Stelzen im Gleisbereich aufgestellten Wechselaufbauten in Querrichtung und bezüglich der Parallel-Ausrichtung sehr genau in Relation zu den Gleisen positioniert werden, damit sie anschließend von Indexzapfen auf den Ladeplattformen der Güterwagen übernommen werden können. Dies ist mit hinreichender Genauigkeit nur mit sehr zeitraubender Rangiertätigkeit seitens des absetzenden Lastkraftwagens oder unter Verwendung von besonderen Bugsierfahrzeugen bei ebenfalls nicht unerheblichem Zeitaufwand möglich. Eine entsprechend genaue Längsausrichtung der aufbauseitigen und der waggonseitigen Indexierungsmittel muß durch eine entsprechende Positionierung des Waggons auf den Gleisen vor dem Übernehmen auf den Waggon herbeigeführt werden. Anschließend werden die Stelzen manuell eingezogen und unterseitig an den Wechselaufbauten versenkt, wie dies auch für den Transport auf straßengängigen Lastkraftwagen üblich ist. Bei langen Güterzügen ist das exakte Positionieren der Wechselaufbauten in Relation zu den Gleisen in Längs- und Querrichtung und hinsichtlich Parallellage sehr zeitraubend.

Bei dem Güterwagen nach der DE 40 20 387 sind entlang beider Längsseiten der Ladeplattform des Güterwagens jeweils nach außen verfahrbare Verriegelungsstange vorgesehen; diese können innenseitig an die von der Ladeplattform seitlich herabhängenden Stelzen eines auf die Ladeplattform aufgenommenen Wechselaufbaues während des Schienentransportes lagesichernd angelegt werden. Außerdem können mit den unter hoher Kraft seitlich verschiebbaren Verriegelungsstangen die aufgenommenen Wechselaufbauten relativ zur Ladeplattform des Güterwagens ausgerichtet werden; eine sehr präzise Aufstellung der Wechselaufbauten vor der Aufnahme durch die Güterwagen hinsichtlich Querlage und Parallelausrichtung zu den Gleisen ist deswegen nicht erforderlich. Eine selbsttätige Verriegelung der übernommenen Wechselaufbauten auf der Ladeplattform in Längsrichtung ist durch eine Schar elastisch nachgiebiger, in die Ladeplattform eingelassene Sperrklinken oder durch eine formschlüssige Verzahnung der erwähnten Verriegelungsstangen mit der Innenseite der Stelzen vorgesehen. Wegen der Verriegelung der Wechselaufbauten an den Stelzen dürfen diese nicht eingezogen und an den Wechselaufbauten verstaut werden. Es müssen entweder die ganzen Ladeplattformen der Güterwagen oder die unteren Enden der - ggf. teleskopartig auszubildenden -Stelzen ausreichend angehoben werden, so daß die Unterseite der Stelzen einen ausreichend großen Freiraum gegenüber dem Untergrund aufweisen und die Gefahr der Kollision mit einer Bodenunebenheit während der Fahrt vermieden ist. Der Transport der Wechselaufbauten mit den Güterwagen erfolgt also zumindest mit teilweise herabhängenden Stelzen. In jedem Fall können nur solche Wechselaufbauten mit diesem System transportiert werden, die verstärkte Stelzen aufweisen; dies bedeutet, daß die Masse der bisherigen Wechselaufbauten von einem solchen System nicht profitieren könnte; das System wäre also nicht für Alt-Aufbauten kompatibel. Im übrigen sind die Wechselaufbauten - ob alt oder neu - nicht gegen Abheben oder gegen Kippen auf der Ladeplattform dieses Güterwagens gesichert, so daß sie nur mit einem reduzierten Lichtraumprofil und/oder unter besonderen, einschränkenden Transportbedingungen für die Fahrt auf der Strecke zugelassen werden können.

Der aus der CH-PS 666 452 bekannte Güterwagen weist ein rahmenförmiges Wagenchassis auf, das auf seiner Oberseite Indexierungs- und Verriegelungsmittel trägt, die mit den aufbauseitig angebrachten Indexierungs- und Verriegelungsmitteln unmittelbar zusammenwirken. Die Lkw-seitig über dem Bahngleis abzustellenden Wechselaufbauten werden mit Hilfe von zwei Lichtschranken, die parallel zu den Gleisen ausgerichtet sind und die die Querlagentoleranz der Wechselaufbauten bestimmen, mit einer gewissen Genauigkeit hinsichtlich Querlage und Parallelität positioniert, wobei eine gewünschte, beim Abstellen des Wechselaufbaues einzuhaltende Position in Bezug auf die Längsrichtung durch eine Bodenmarkierung definiert ist. Um die solcherart über dem Bahngleis positionierten Wechselaufbauten waggonseitig übernehmen zu können, weist der Güterwagen vorne und hinten bordeigene, durch Luftfederbälge gebildete Hubmittel auf, die mit ihrer Oberseite jeweils quer zum Wagenchassis und die beide gemeinsam und als ganzes in Längsrichtung relativ zum Wagenchassis mittels Handkurbel und Gewindetrieb verschiebbar sind. Oberseitig sind die beiden Hubmittel mit zylindrischen Zentrierscheiben versehen, die um eine mittig angeordnete vertikale Achse drehbar gelagert sind. Sie stimmen bezüglich ihrer Abmessungen mit funktionsgleichen Zentrierscheiben an den Lastkraftwagen überein und arbeiten mit einem flach-rechteckigen, mittig an der Unterseite der Wechselaufbauten durchgehenden Zentriertunnel zusammen. Zum Übernehmen des mit relativ groben Lagetoleranzen zu den Gleisen abgestellten Wechselaufbaues durch den Güterwagen muß dieser durch die bordeigenen Hubmittel zunächst zum Wagenchassis mit wesentlich geringeren Toleranzen zentriert werden. Zu diesem Zweck werden bei dem in Längsrichtung vor oder hinter dem Wechselaufbau in Bereitschaft gebrachten Güterwagen die Zentrierscheiben auf die Höhe des Zentriertunnels angehoben und der Güterwagen unter den Wechselaufbau eingeschoben, wobei die oberseitig quer beweglichen Hubmittel aufgrund des Zusammenwirkens der Zentrierscheiben und des Zentriertunnels selbsttätig relativ zum Wechselaufbau zentriert werden. In Längsrichtung muß der Güterwagen mit einer gewissen Lagetoleranz in Relation zum Wechselaufbau zum Stehen gebracht werden. Durch noch weiteres Anheben der bordeigenen Hubmittel einschließlich des Wechselaufbaues können dessen Stelzen entlastet und diese eingezogen und verstaut werden. Zugleich mit diesem Anheben werden durch in den Luftfederbälgen integrierte Schrägkanten und Abweisrollen die querbeweglichen Hubmittel und der von ihnen getragene Wechselaufbau zum Wagenchassis zentriert und parallel ausgerichtet. Vor einem Absenken des Wechselaufbaus in die chassis-seitigen Indexierungs- und Verriegelungsmittel müssen der Wechselaufbau und die ihn tragenden Hubmittel gemeinsam in Längsrichtung zum Wagenchassis ausgerichtet werden, wofür der erwähnte manuell antreibbare Gewindetrieb vorgesehen ist. Nach einer entsprechenden Längsausrichtung kann der Wechselaufbau in die chassis-seitigen Indexierungs- und Verriegelungsmittel abgesenkt und verriegelt werden.

Nachteilig an dem aus der CH-PS 666 452 bekannten Güterwagen bzw. der entsprechenden Übernahmetechnik sind verschiedene Punkte: Wegen der Zentrierung der bordeigenen Hubmittel zum Wechselaufbau durch das oder während des Einfahrens des Güterwagens unter den Wechselaufbau ist zum einen ein sehr hoher Platzbedarf in Längsrichtung erforderlich und ein Übernehmen nur auf einzelne Güterwagen möglich, die erst nach ihrer Beladung zu einem Zug zusammengestellt werden können. Auf leere Güterwagen, die bereits zu einem Zugverband zusammengekuppelt sind, können Wechselaufbauten nicht übernommen werden, was jedoch aus Gründen der Rationalisierung zu fordern wäre. Wegen der Zentrierung und Parallelausrichtung der Wechselaufbauten zum Wagenchassis durch das Anheben der Hubmittel in die obere Endstellung ist ferner ein Übernehmen von Wechselaufbauten unterschiedlicher Aufstellhöhe problematisch oder sogar gänzlich unmöglich. Weil jedoch Wechselaufbauten unterschiedlicher Aufstellhöhe in großer Anzahl im Einsatz sind, sollte ein Güterwagen für beide Aufbauarten in gleicher Weise geeignet sein. Nachteilig ist außerdem, daß zwei gesonderte Ausrichtvorgänge, nämlich eine Quer- und Parallelausrichtung zum einen und eine Längspositionierung zum Wagenchassis zum anderen, zeitlich nacheinander durchzuführen sind, wodurch sich das Beladen sehr zeitaufwendig gestaltet.

Aufgabe der Erfindung ist es, den gattungsgemäß zugrundegelegte Güterwagen dahingehend zu verbessern, daß mit ihm Wechselaufbauten unterschiedlicher Aufstellhöhe bei geringem Platzbedarf und im Zugverband rationell übernommen werden können.

Diese Aufgabe wird bei Zugrundelegung des gattungsgemäßen Güterwagens erfindungsgemäß durch die kennzeichnenden Merkmale von Anspruch 1 gelöst. Aufgrund der Beweglichkeit der Ladeplattform gegenüber dem Wagenchassis kann diese bei stillstehendem Güterwagen und in teilangehobenem Zustand auf Sicht manuell auf den zu übernehmenden Wechselaufbau ausgerichtet werden, wobei das relative Ausrichten bezüglich der Querposition und Parallelausrichtung zum einen sowie der Längsausrichtung zum anderen gleichzeitig in einem einzigen Arbeitsgang erfolgen kann. Das exakte Zentrieren der Ladeplattform zum Wagenchassis erfolgt völlig selbsttätig beim Absenken der Ladeplattform durch die Wirkung der beiden Paare von sehr großen Zentrierelemente, die bezüglich aller drei Freiheitsgrade der Beweglichkeit der Schwimmführung wirksam sind. Durch die genannten Maßnahmen ist der Vorgang des zentriergenauen Ausrichtens und Absetzens des Wechselaufbaues auf den Güterwagen sehr rasch ausführbar. Nachdem diese Vorgänge bei Waggonstillstand stattfinden, können - und sollten sogar - die zur Übernahme bereitgestellten Wechselaufbauten nicht nur in sehr dichtem Abstand, also bei sehr geringem Platzbedarf über den Gleisen aufgereiht werden, sondern es können auch die bereitgestellten Wechselaufbauten in rationeller Weise von den zu einem Zugverband zusammengekuppelten Güterwagen übernommen werden. Nachdem das Übernehmen der Wechselaufbauten und Ausrichten der Ladeplatform zu ihnen zum einen bei Wagenstillstand und das selbsttätige Ausrichten der Ladeplattform zum Wagenchassis zum anderen durch das Absenken der Ladeplattform erfolgt, können in gewissen durch die Konstruktionspraxis gezogenen Grenzen praktisch alle möglichen Abstellhöhen der Wechselaufbauten für den Übernahmevorgang zugelassen werden, so daß das System in soweit recht flexibel ist.

Zweckmäßige Ausgestaltungen der Erfindung können den Unteransprüchen entnommen werden; im übrigen ist die Erfindung an hand eines in der Zeichnung dargestellten Ausführungsbeispieles nachfolgend noch erläutert; dabei zeigen:

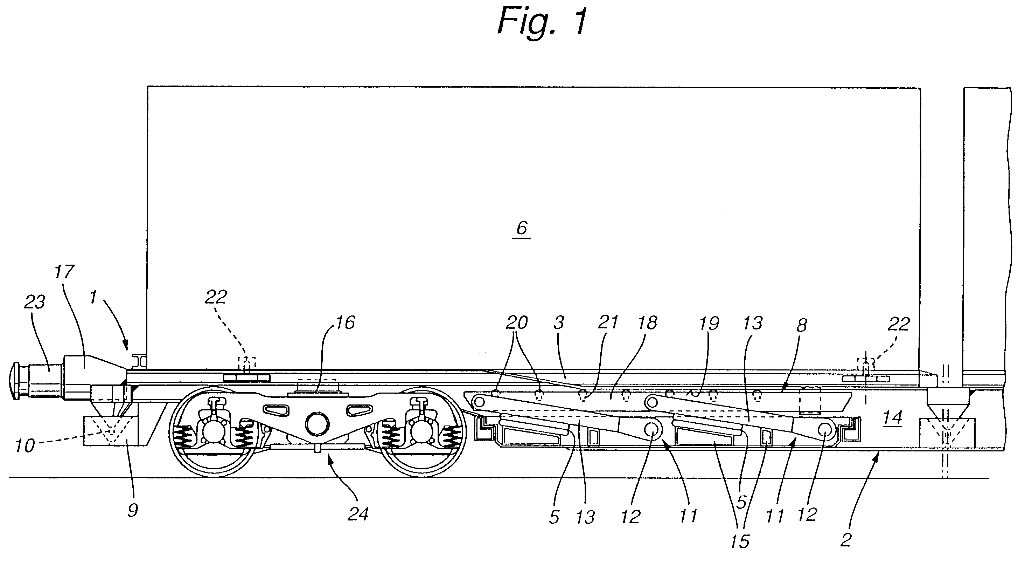

- Fig. 1: einen einzelnen Güterwagen - teilweise - in Seitenan sicht,

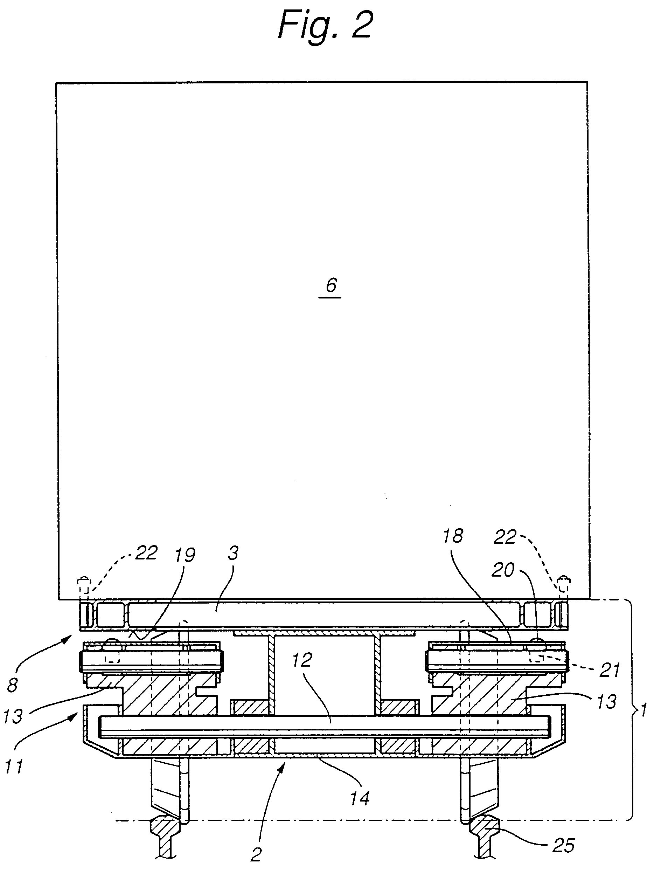

- Fig. 2: den Güterwagen nach Figur 1 in Stirnansicht,
- Fig. 3 bis 7: eine Abfolge von Phasen bei der Übernahme von symmetrisch über den Gleisen aufgereihten Wechselaufbauten auf Güterwagen, die zu einem Zugverband zusammengekuppelt sind, in Seitenansicht,
- Fig. 8: eine Draufsicht auf den fertig beladenen Güterzug und
- Fig. 9 und 10: eine schematische Darstellung der Wirkungsweise einer kraftunterstützten Zentrierung der Ladeplattform mit in den Eckbereich hineindrückbaren Druckrollen.

Für den kombinierten Güterfernverkehr auf der Schiene und der Straße sind Wechselaufbauten 6 vorgesehen, die heute bereits im rein straßengebundenen Güterverkehr auf Lastkraftwagen in großer Zahl im Einsatz sind. Durch die erfindungsgemäße Ausgestaltung der Güterwagen 1 soll ein Umschlag dieser Wechselaufbauten auch auf geeignete Güterwagen ermöglicht werden.

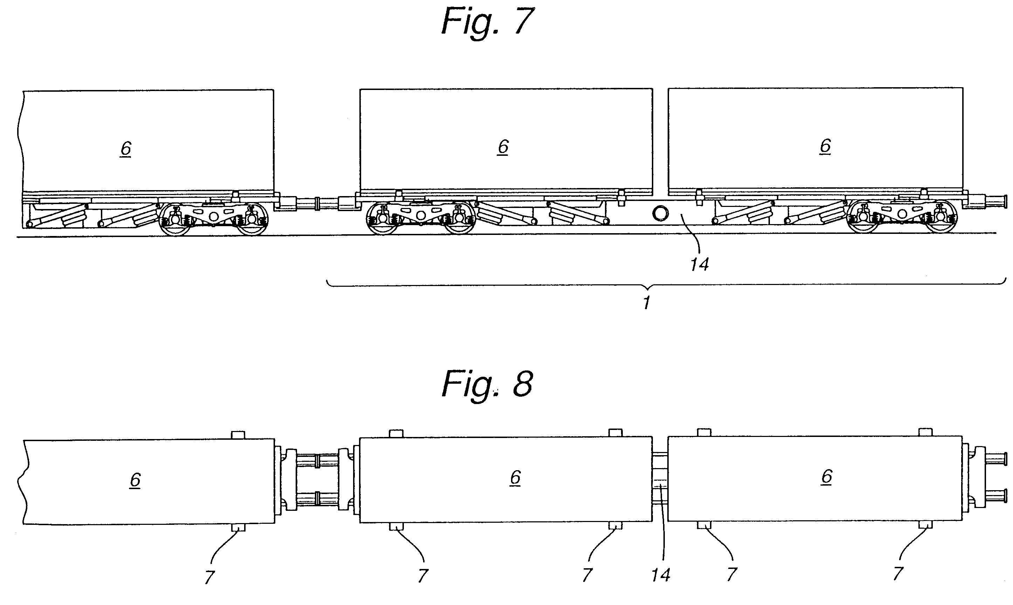

Die dazu vorgesehenen Güterwagen 1 weisen eine bordwandlose Ladeplattform 3 auf, die zur Aufnahme derartiger Wechselaufbauten dienen. Die Wechselaufbauten 6 sind auf vier integrierte Stelzen 4 auf Lkw-Pritschenhöhe symmetrisch über den Gleisen 25 abgestellt. Der Boden muß im Gleisbereich eben sein, d. h. die Schienen müssen versenkt im Boden verlegt sein, derart, daß die Schienenköpfe bündig zur Fahroberfläche liegen. Auf dem Boden sind Bodenmarkierungen 7 (siehe Fig. 8) aufgezeichnet, auf denen die Stelzen 4 der Wechselaufbauten zu stehen kommen müssen, damit die Wechselaufbauten mit für eine Übernahme geeignete Genauigkeit in Relation zu den Gleisen stehen. Die Bodenmarkierungen sind durch ein Rechteck gebildet, innerhalb dessen die Stelzen stehen müssen; das bodenmarkierte Rechteck stellt gewissermaßen das Toleranzfeld für die Aufstellung der Wechselaufbauten beim Lkw-seitigen Absetzen dar. Das Lichtraumprofil der leeren Güterwagen 1 ist über dessen gesamter Länge hinweg in Höhe und Breite geringer als das Lichtraumprofil unterhalb der über den Gleisen 25 abgestellten Wechselaufbauten. Auf den Güterwagen selber sind bordeigene, mit Luftfederbälgen 5 ausgestattete Hubmittel vorgesehen, mit denen ein Wechselaufbau um wenigstens etwa 40 cm heb- und senkbar ist, um auch Wechselaufbauten mit einer lichten Aufstellhöhe von 1320 mm übernehmen zu können. Durch Horizontalbeweglichkeiten in Längs- und in Querrichtung in den Hubmitteln ist der von ihnen aufgenommene Wechselaufbau in angehobenem Zustand zur Längsmittelachse und zur Querachse des Güterwagens 1 auf Indexierungsgenauigkeit ausrichtbar.

Damit die Wechselaufbauten 6 bei geringem Platzbedarf und von zu einem Zugverband verbundenen Güterwagen rationell übernommen werden können, ist erfindungsgemäß vorgesehen, daß die Ladeplattform 3 gegenüber dem Wagenchassis als gesondertes, relativ zu ihm bewegliches Teil ausgebildet ist, welches mittels der bordeigenen Hubmittel um die genannten Beträge heb- und senkbar ist. Die bordeigenen Hubmittel, auf die weiter unten noch näher eingegangen werden soll, sind an ihrer Oberseite über eine horizontale Schwimmführung 8 in drei Freiheitsgraden der Bewegung horizontal beweglich mit der Ladeplattform 3 verbunden. Dabei ist die Schwimmführung derart ausgebildet, daß eine Verschiebung der Ladeplattform in Längs- und in Querrichtung um jeweils ein der Aufstelltoleranz der Wechselaufbauten über den Gleisen 25 entsprechendes Verschiebemaß sowie eine Verschwenkung der Verladeplattform um eine vertikale Achse im Rahmen des Verschiebemaßes in beliebigen Kombinationen der drei genannten Bewegungen ermöglicht ist. An der Ladeplattform 3 und am Wagenchassis 2 sind in horizontalem Abstand zueinander zwei beim Absenken der Ladeplattform zentrierend ineinandergreifende Paare von vertikal ausgerichteten Zentrierelementen, nämlich ein Zentriertrichter 9 am Wagenchassis 2 und ein Zentrierzapfen 10 an der Ladeplattform 3 angeordnet. Die Öffnung der Zentriertrichter 9 ist größer als das Verschiebemaß der Ladeplattform 3 gegenüber den Hubmitteln bzw. innerhalb der Schwimmführung 8. In angehobenem Zustand der Ladeplattform befindet sich die Spitze des Zentrierzapfens 10 axial im Bereich des größten lichten Durchmessers des zugehörigen Zentriertrichters 9, wogegen in abgesenktem Zustand der Ladeplattform die Spitze axial jenseits des kleinsten lichten Durchmessers zu liegen kommt.

Damit die Wechselaufbauten auch bei Einwirkung von Querkräften oder bei stark ungleichmäßiger Beladung der Wechselaufbauten während des Hebens oder Senkens verkantungssicher in ihrer Horizontallage gehalten werden können, ist die oberseitig an den Hubmitteln angebrachte Schwimmführung 8 mittels zweier rechts und links am Wagenchassis angelenkter, kinematisch und lagemäßig übereinstimmender Parallelogrammführungen 11 versehen, die untereinander starr mittels einer Verbindungswelle 12 verbunden sind. Dadurch ist sichergestellt, daß alle vier Ecken der im Prinzip rechteckigen Schwimmführung mechanisch auch bei stark unterschiedlicher Belastung eine stets gleiche Höhenlage in allen Hubstellungen einnehmen. Die Schwingen 13 der Parallelogrammführung sind unterseitig am Wagenchassis 2 an der bereits erwähnten Verbindungswelle 12 angelenkt; oberseitig sind sie an der Schwimmführung 8 bzw. der Führungsplatte 18 angelenkt. Aus Stabilitätsgründen und auch aus Gründen der Unterbringung der Luftfederbälge 5 müssen die Schwingen 13 eine gewisse Mindestbreite haben. Um bei einer möglichst großen Breite der Hubmittel Platz für die Unterbringung der Parallelogrammführung 11 zu schaffen, ist das Wagenchassis durch einen rohrförmigen, entlang der Längsmittellinie des Güterwagens über dessen Länge durchlaufender Zentralträger 14 gebildet, der beim dargestellten Ausführungsbeispiel im Querschnitt rechteckig, wenn auch mit unterschiedlicher Profilhöhe, ausgebildet ist. Im Bereich der Drehgestelle 24 ist der Zentralträger 14 flacher, wogegen er im mittleren, höher auf Biegung beanspruchten Bereich in Vertikalrichtung eine größere Bauhöhe aufweist. Rechts und links sind an dem Zentralträger 14 Querträger 16 angesetzt, die der Abstützung der Führungsplatte 18 einschließlich Wechselaufbau 6 in Transportstellung dienen. Die Konsolen 15 sind nicht direkt am Zentralträger 14 angesetzt, sondern sind Teil des unteren Hubrahmens, der seinerseits an seinen beiden Enden einstellbar auf querträgern gelagert ist, die am Zentralträger angesetzt sind, was jedoch zeichnerisch nicht dargestellt ist. Die Konsolen 15 haben unterschiedliche Funktionen: Zum einen sollen sie durch die vorderen Konsolen für die Bälge 5 die Hubkräfte in den Waggon abtragen, zum anderen sollen sie gemeinsam mit hinteren Auflagekonsolen Schwingungen der Schwingen 13 während der Fahrt verhindern. Endseitig sind am Zentralträger 14 jeweils Querträger 17 zur Halterung der Kupplungspuffer 23 angebracht. Die beiden Parallelogrammführungen sind zu beiden Seiten des Zentralträgers 14 angelenkt.

Die bereits mehrfach erwähnten Luftfederbälge 5 der Hubmittel stützen sich unterseitig auf den bereits erwähnten Konsolen 15 ab; oberseitig greifen die Luftfederbälge 5 an der Unterseite der Schwingen 13 der Parallelogrammführung 8 an. Dadurch kommt eine Hubübersetzung zwischen der Oberseite der Luftfederbälge 5 einerseits und der Führungsplatte 18 der Parallelogrammführung andererseits zustande. Eine solche Hubübersetzung ist nötig, damit bei kleinem Bauraum die erforderliche Hubhöhe auch für die höchsten Wechselaufbauten 6 durch die Hubmittel aufgebracht werden kann. Es ist hierbei daran zu denken, daß Wechselaufbauten mit unterschiedlicher Aufstellhöhe im Einsatz sind. Der Vollständigkeit halber sei erwähnt, daß die Führungsplatte 18 mit mehreren Umfangungen für die Ladeplattform 3 versehen ist, um ein Abkippen der schwimmenden Ladeplattform von der Führungsplatte zu verhindern, was jedoch zeichnerisch nicht dargestellt ist.

Die mehrfach erwähnten Hubmittel sind beim dargestellten Ausführungsbeispiel durch die Parallelogrammführung 11 mit den Schwingen 13 sowie den unterseitig an den Schwingen angreifenden Luftfederbälge 5 gebildet. Die ebenfalls bereits mehrfach erwähnte Schwimmführung der Ladeplattform ist zum einen durch je eine rechts und links an den Parallelogrammführungen gehalterte Führungsplatte 18 und zum anderen durch je eine entsprechende Stützplatte 19 an der Unterseite der Ladeplattform 3 gebildet. Damit die Ladeplattform 3 möglichst leichtgängig durch die Schwimmführung 8 horizontal bewegt werden kann, tragen die Führungsplatten 18 oberseitig mehrere gleichmäßig verteilt angeordnete Wälzkugeln 20, die die Führungsplatten geringfügig überragen und die ihrerseits jeweils leichtgängig und abgedichtet in einem Lagergehäuse 21 allseits beweglich gelagert sind. Die unterseitig an der Ladeplattform angebrachten Stützplatten 19 sind durch ebene, gehärtete, angeschweißte Stahlplatten gebildet. Die Führungs- und Stützplatten 18 bzw. 19 beschränken sich auf rechte und linke Seitenstreifen, wobei die Führungsplatten 18 jeweils nur eine Reihe von Wälzkugeln 20 aufzuweisen brauchen; die Breite der Stützplatten 19 muß dem bereits früher erwähnten Verschiebemaß bzw. der Aufstelltoleranz der Wechselaufbauten entsprechen.

Um den aufgenommenen Wechselaufbau 6 transportsicher auf dem Güterwagen 1 fixieren zu können, ist die Ladeplattform 3 mit ersten Indexierungs- und Verriegelungsmitteln 22 zum gegenseitigen Verriegeln der Ladeplattform 3 mit dem aufzunehmenden Wechselaufbau versehen, wobei diese Verriegelungsmittel den Wechselaufbau auch gegen Abheben oder Kippen gegenüber der Ladeplattform sichern. Diese plattformseitigen ersten Indexierungs- und Verriegelungsmittel wirken mit aufbauseitigen Indexierungs- und Verriegelungsmitteln zusammen, die auch zum Indexieren und Verriegeln der Wechselaufbauten auf dem Lastkraftwagen verwendet werden. Über diese erste Indexierungs- und Verriegelungsmittel hinaus sind an der Ladeplattform 3 sowie am Wagenchassis 2 weitere Mittel zum gegenseitigen transportsicheren Verriegeln der Ladeplattform am Wagenchassis auch gegen Abheben und Kippen der Ladeplattform vorgesehen. Es ist denkbar, daß als diese weiteren Indexierungs- und Verriegelungsmittel zwischen Ladeplattform und Wagenchassis die bereits erwähnten Paare von Zentrierelementen, nämlich Zentrierzapfen 10 und Zentriertrichter 9 verwendet werden, wobei zum Verriegeln beider Teile noch ein Querschieber am unteren Ende des Zentriertrichers vorgesehen ist, der den Zentrierzapfen formschlüssig innerhalb des Zentrums des Zentriertrichters festhält und ein Herausziehen des Zentrierzapfens verhindert. Eine andere Möglichkeit zur kippsicheren Verriegelung von Ladeplattform und Wagenchassis besteht darin, daß zwei Paare von Lkw-Verriegelungen in der Nähe der Zentriertrichter bzw. der Zentrierzapfen angebracht sind; und zwar sind an der Ladeplattform sog. Corner-Castings und am Wagenchassis Verriegelungsbolzen befestigt, die nach der Zentrierung miteinander verbunden werden. Da der mittlere Bereich des Güterwagens voll durch den Zentralträger 14 eingenommen ist, sind die beiden horizontal beabstandeten Paare von Zentrierelementen - Zentrierzapfen 10 und Zentriertrichter 9 - im Bereich der beiden endseitigen Querseiten der Ladeplattform derart außermittig angeordnet, daß sie diagonal über die Plattformmitte hinweg einander gegenüberliegen. Dadurch ist deren Abstandsbasis und somit die Zentriergenauigkeit vergrößert gegenüber einer anderen Anordnung mit weniger großem Horizontalabstand der beiden Paare von Zentrierelementen.

Nachdem die Wechselaufbauten 6 für straßengängige Fahrzeuge in aller Regel wesentlich kürzer sind als übliche Güterwagen, ist beim dargestellten Ausführungsbeispiel vorgesehen, daß auf dem Wagenchassis 2 des Güterwagens hintereinander zwei Ladeplattformen 3 angeordnet sind, die mittels jeweils gesonderter Hubmittel für sich heb- und senkbar und mittels jeweils gesonderter Schwimmführungen horizontal verschiebbar sind. Dadurch können je Längeneinheit eines Güterzuges mehr Wechselaufbauten untergebracht werden, weil pro Wechselaufbau nur einmal die Länge für Güterwagenkupplung anfällt. Außerdem können die beiden auf einem Güterwagen aufzunehmenden Wechselaufbauten für sich ausgerichtet und zentriert werden.

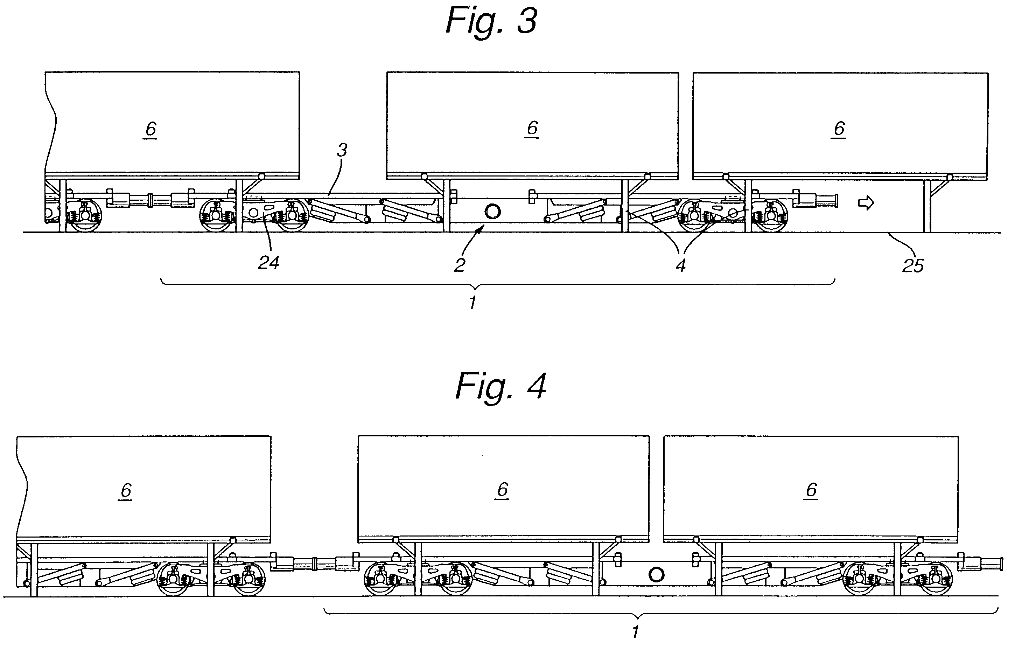

Die Arbeitsweise beim Übernehmen der Wechselaufbauten auf einen Güterwagen soll nachfolgend anhand der Bilderfolge der Figuren 3 bis 8 erläutert werden. Dabei wird davon ausgegangen, daß die Wechselaufbauten 6 Lkw-seitig symmetrisch zu den Gleisen 25 aufgereiht sind, wobei die Stelzen 4 der Wechselaufbauten innerhalb der rechteckigen Bodenmarkierungen 7 aufstehen und somit mit hinreichender Übernahmegenauigkeit hinsichtlich Querpositionierung, Längspositionierung und Parallelität zu den Gleisen aufgestellt sind. Dabei stehen stets zwei Wechselaufbauten 6 dicht nebeneinander, so daß sie von einem einzigen Güterwagen übernommen werden können. Zum nächsten Paar von Wechselaufbauten ist ein etwas größerer Abstand eingehalten, der den Kupplungsabstand zum nächstfolgenden Güterwagen berücksichtigt. Bei der in Fig. 3 dargestellten Arbeitsphase fährt der Güterzug unter die symmetrisch zu den Gleisen aufgereihten Wechselaufbauten 6 ein. Auch der Güterzug muß in einer definierten Längsposition in Relation zu den Bodenmarkierungen zum Stillstand kommen, damit die aufgereihten Wechselaufbauten auch alle übernommen werden können. Hierbei ist es wichtig, daß die Längentoleranzen zwischen den einzelnen Güterwagen ein bestimmtes Maß nicht überschreiten dürfen. Notfalls sind Vorkehrungen zu treffen, die zumindest für den Zeitpunkt der Beladung der Güterwagen den Zugverband derart starr machen, daß die erwähnten Toleranzen eingehalten werden können. Der Zustand der Längspositionierung des Güterzuges unter den aufgereihten Wechselaufbauten 6 ist in Fig. 4 veranschaulicht.

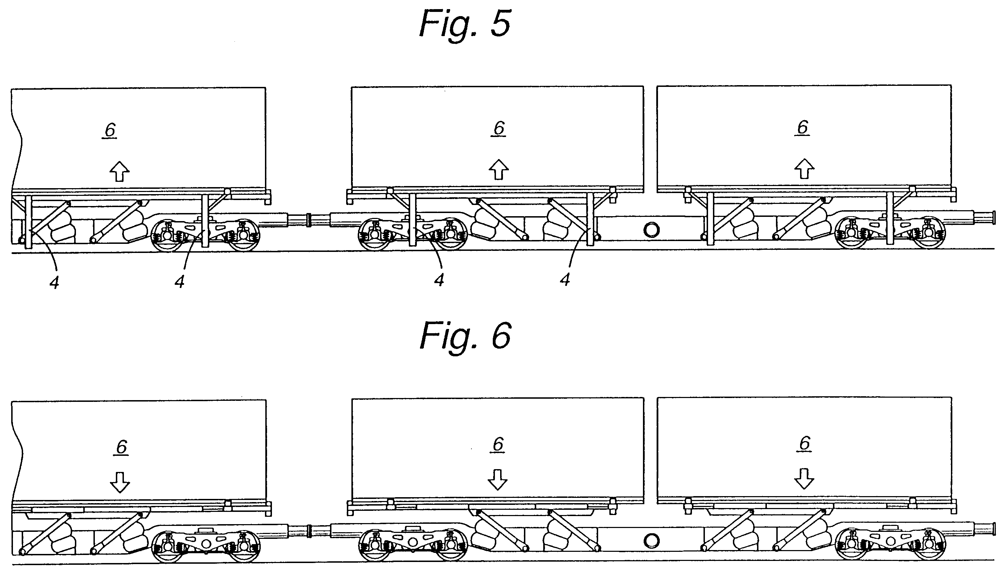

Anschließend werden nacheinander die einzelnen Ladeplattformen in teilangehobenem Zustand aber unbelastet manuell und auf Sicht zu den Wechselaufbauten ausgerichtet und - nach Anheben der Plattform - die plattformseitigen, ersten Indexierungsmittel 22 in die entsprechenden Gegenindexierungsmittel an den Wechselaufbauten eingefädelt und verriegelt. Nachdem die Ladeplattform beim horizontalen Ausrichten derselben auf den bereitgestellten Wechselaufbau noch leer ist, kann das horizontale Verschieben der Ladeplattform in der Schwimmführung mit geringer, ohne weiteres manuell aufbringbarer Kraft durchgeführt werden. Durch weiteres Betätigen der Hubmittel können die Wechselaufbauten vom Boden abgehoben werden, so daß die Stelzen 4 vom Boden freikommen und eingezogen und an den Wechselaufbauten in üblicher Weise verstaut werden können. In Fig. 5 ist der angehobene Zustand jedoch noch mit herabhängenden Stelzen 4 dargestellt. Dieses Anheben der Wechselaufbauten erfolgt noch in einem Zustand, bei dem die Wechselaufbauten einschließlich der Ladeplattformen im Rahmen der tolerierbaren Aufstellgenauigkeit undefiniert in Bezug auf das Wagenchassis der Güterwagen angeordnet sind. Durch den in Fig. 6 veranschaulichten Absenkvorgang der Wechselaufbauten erfolgt vermittels der Zentriertrichter 9 und der Zentrierzapfen 10 auf selbsttätige Weise eine exakte Längs-, Quer- und Parallelausrichtung der Ladeplattformen und der Wechselaufbauten zum Wagenchassis. Hierbei ist keinerlei Eingriff von Menschen mehr erforderlich; es ist ohne weiteres denkbar, alle nach dem Einziehen und Verstauen der Stelzen 4 vorkommenden Vorgänge zu automatisieren. In Fig. 7 ist der abgesenkte Zustand der Ladeplattformen auf das Wagenchassis sowie das Verriegeln der Hubplattformen zu ihm veranschaulicht. Von diesem Stadium an kann der Güterwagen seine Reise über die Strecke beginnen. Die Fig. 8 veranschaulicht den gleichen Zustand wie Fig. 7 in einer Grundrißdarstellung.

Bahnbetriebsseitig ist ein quell- und zielreiner Verkehr der Wechselaufbauten von einem bestimmten Ausgangsbahnhof zu einem bestimmten Zielbahnhof vorgesehen. Nach Ankunft des Güterzuges am Zielbahnhof kann der Umschlag der Wechselaufbauten auf die Lastkraftwagen, die die Wechselaufbauten in der Fläche zu ihrem jeweiligen Bestimmungsort weitertransportieren, in umgekehrter Richtung erfolgen. Hierbei ist der Ablauf dieses Umschlages insofern jedoch einfacher und weniger aufwendig, da auf eine genaue Positionierung der Behälter verzichtet werden kann. Die Wechselaufbauten werden auf einem mit straßengängigen Fahrzeugen befahrbaren Gleisabschnitt in einer Reihe abgestellt und nach und nach von dort ansässigen Spediteuren per Lastkraftwagen abgeholt.

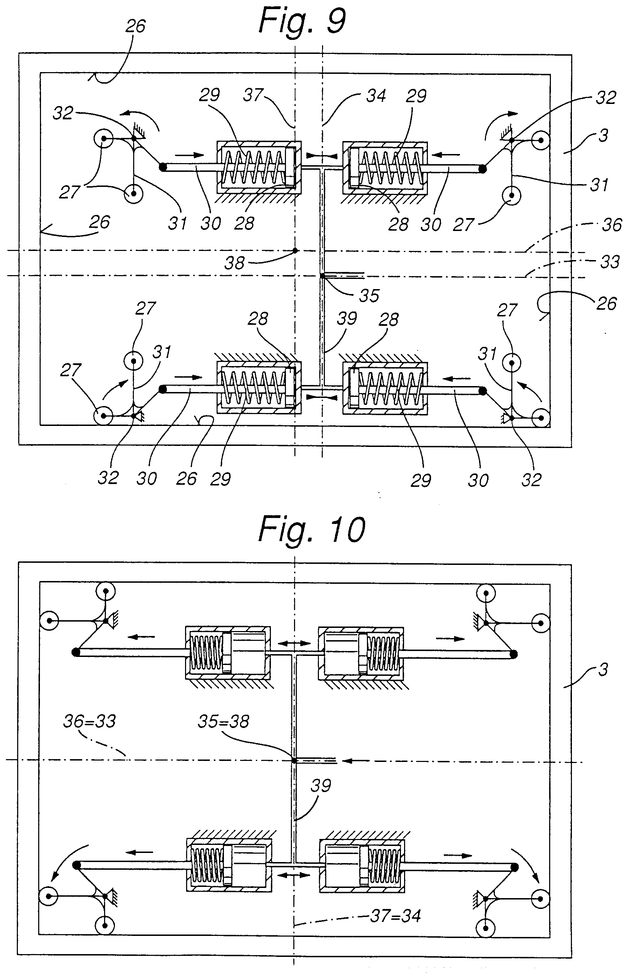

Zum Schluß sei noch im Zusammenhang mit den Figuren 9 und 10 auf eine andere Möglichkeit des Zentrierens der unter Last stehenden Ladeplatform eingegangen. Bei dem dort gezeigten Ausführungsbeispiel sind Mittel zum kraftunterstützten Zentrieren der nahezu vollständig abgesenkten, aber noch auf der Schwimmführung 8 beweglich aufliegenden Ladeplattform 3 vorgesehen. Zu diesem Zweck sind an der Ladeplattform parallel zu deren Außenseiten verlaufende Druckstege 26 im Eckbereich der Ladeplattform angeordnet. Am Wagenchassis 2 sind mit den Druckstegen zusammenarbeitende Druckrollen 27 mit vertikaler Drehachse angeordnet, deren jede jeweils um ein wenigstens der Aufstelltoleranz der Wechselaufbauten 6 entsprechendes Maß horizontal verschiebbar ist. Beim dargestellten Beispiel sind jeder Ecke jeweils zwei Druckrollen zugeordnet, die an den Enden eines insgesamt dreiarmigen Schwenkhebels 31 gelagert sind, der seinerseits an einem ortsfest dem Wagenchassis zugeordneten Schwenklager 32 schwenkbar gelagert ist. Am Ende des dritten Armes des Schwenkhebels greift die Kolbenstange 30 eines fluidisch beaufschlagbaren Betätigungskolbens 28 gelenkig an. Durch eine im Zylinder angeordnete Rückstellfeder 29 kehrt der Kolben und mit ihm der Schwenkhebel nach Belüftung des Arbeitsraumes mit Atmosphärendruck in die in Figur 9 gezeigte Grundstellung zurück, in der die Druckrollen zurückgezogen sind. Durch Druckbeaufschlagung der Kolben 28 über die Fluidleitung 39 werden die Schwenkhebel um etwa 90° in die in Figur 10 gezeigte Zentrierstellung verschwenkt, wobei die zugehörigen Druckrollen in die zentrierend wirkende Außenlage übergehen. Die Armlängen der mit Druckrollen versehen Arme des Schwenkhebels sind in Verbindung mit der Lage der chassis-festen Schwenklager 32 so bemessen, daß sich zum einen der oben erwähnte Verschiebehub der Druckrollen in Längs- bzw. Querrichtung ergibt und daß zum anderen auch die die exakte Zentrierlage der Ladeplattform 3 bestimmende Endstellung mechanisch definiert ist. Durch das Einfahren der Druckrollen in die in Figur 10 dargestellte Zentrierstellung wird über die Druckstege die unter Last stehende, aber noch auf der Schwimmführung beweglich aufliegende Ladeplattform derart horizontal verschoben und ggf. verschwenkt, daß die der Ladeplattform zugeordnete Längsachse 36, deren Querachse 37 und deren Mitte 38 lagegleich liegen zu der dem Wagenchassis zuzuordnenden Längsachse 33, der entsprechenden Querachse 34 bzw. der zugehörigen Mitte 35.

Der Vollständigkeit halber sei noch erwähnt, daß nicht nur genormte Wechselaufbauten nach DIN EN 284 für diesen kombinierten Güterfernverkehr Schiene/Straße zugelassen werden können, bei denen die Stelzen 4 in den Wechselaufbauten integiert sind, sondern es können auch genormte Schiffscontainer für den kombinierten Güterfernverkehr Schiene/Straße zugelassen werden, die keine integrierten Stelzen enthalten. Hierfür sind jedoch gesonderte, an den Container ansetzbare Stelzen vorzusehen und auf den Umschlagebahnhöfen bereitzustellen. Diese Stelzen werden nach dem Ausrichten der Ladeplattform auf den Container und abheben desselben vom Boden abgenommen; die abgenommenen Stellzen verbleiben jeweils an den Bahnhöfen und werden dort bedarfsweise wieder benutzt.

Ferner sei noch erwähnt, daß die zuletzt genannte Möglichkeit unter anderem auch darauf beruht, daß die erfindungsgemäße Umschlagtechnik nicht auf den Mitteltunnel bei den Wechselaufbauten nach DIN EN 284 zurückgreift, sondern daß unterseitig ebene oder beliebig gestaltet Wechselaufbauten ohne weiteres übernommen werden können. Allerdings muß einschränkend erwähnt werden, daß die ersten Indexierungs- und Verriegelungsmittel der Ladeplattformen 3 mit entsprechenden Gegen-Indexierungs- und Verriegelungsmitteln der Wechselaufbauten übereinstimmen müssen; zumindest müssen lageentsprechende Indexierungsmittel plattformseitig vorgesehen oder umrüstbar sein.

## Patentansprüche

1. Schienengebundener Güterwagen (1) für den kombinierten Güterfernverkehr Schiene/Straße, wobei
- der Güterwagen (1) eine bordwandlose Ladeplattform (3) zur transportgesicherten Aufnahme eines auf vier integrierten Stelzen (4) auf Lkw-Pritschenhöhe symmetrisch über den Gleisen (25) abgestellten Wechselaufbaues (6) für Lastkraftwagen aufweist,
- der Güterwagen (1) ferner bordeigene Hubmittel (5,11) aufweist, mit denen ein Wechselaufbau (6) um eine Hubhöhe - vorzugsweise um wenigstens etwa 40 cm - heb- und senkbar ist,
- das Lichtraumprofil der leeren Güterwagen (1) über dessen gesamte Länge hinweg bei abgesenkten Hubmitteln in Höhe und Breite geringer - in Höhenrichtung jedoch um weniger als die erwähnte Hubhöhe geringer - als das Lichtraumprofil unterhalb des über den Gleisen (25) abgestellten Wechselaufbaues (6) ist,
- wobei durch Horizontalbeweglichkeiten in Längs- und in Querrichtung der aufgenommene Wechselaufbau (6) in angehobenem Zustand zur Längsmittel- und zur Querachse des Güterwagens auf Indexiergenauigkeit zum Wagenchassis (2) ausrichtbar ist,
**dadurch gekennzeichnet,**
daß
- die gegenüber dem Wagenchassis (2) als gesondertes, relativ zu ihm bewegliches Teil ausgebildete Ladeplattform (3) mittels der bordeigenen Hubmittel heb- und senkbar ist,
- die bordeigenen Hubmittel an ihrer Oberseite über eine horizontale Schwimmführung (8) in drei Freiheitsgraden der Bewegung horizontalbeweglich mit der Ladeplattform (3) verbunden sind, wobei die Schwimmführung (8) derart ausgebildet ist, daß eine Verschiebung der Ladeplattform (3) in Längs- und in Querrichtung um jeweils ein der Aufstell-Toleranz der Wechselaufbauten (6) über den Gleisen (25) entsprechendes Verschiebemaß sowie eine Verschwenkung der Ladeplattform (3) um eine vertikale Achse im Rahmen des Verschiebemaßes in beliebigen Kombinationen der drei genannten Bewegungen ermöglicht ist und
- wobei an der Ladeplattform (3) und am Wagenchassis (2) während des oder nach dem Absenken der Ladeplattform (3) zur Wirkung kommende Mittel zum kraftunterstützten Zentrieren der unter Last stehenden Ladeplattforn (3) zum Wagenchassis (1) in Längs- und Querrichtung angeordnet sind.

2. Güterwagen nach Anspruch 1,
**dadurch gekennzeichnet**,
daß als Mittel zum kraftunterstützten und selbsttätigen Zentrieren während des Absenkens der Ladeplattform (3) an der Ladeplattform (3) und am Wagenchassis (2) in horizontalem Abstand zueinander wenigstens zwei zentrierend ineinandergreifende Paare von vertikal ausgerichteten Zentrierelemente - Zentrierzapfen (10) und Zentriertrichter (9) - angeordnet sind, wobei die Öffnung der Zentriertrichter (9) größer ist als das Verschiebemaß der Ladeplattform (3) gegenüber den Hubmitteln (Luftfederbälge 5, Parallelogrammführung 11) und wobei die Zentrierzapfen (10) mit ihrer Spitze in angehobenem Zustand der Ladeplattform (3) axial im Bereich des größten lichten Durchmessers der Zentriertrichter (9) und in abgesenktem Zustand der Ladeplattform (3) axial jenseits des kleinsten lichten Durchmessers der Zentriertrichter (9) liegen.

3. Güterwagen nach Anspruch 1,
**dadurch gekennzeichnet**,
daß als Mittel zum kraftunterstützten Zentrieren der nahezu vollständig abgesenkten, aber noch auf der Schwimmführung beweglich aufliegenden Ladeplattform (3) an dieser parallel zu den Außenseiten der Ladeplattform (3) verlaufende, vorzugsweise im Eckbereich angeordnete Druckstege (26) und am Wagenchassis (2) mit den Druckstegen (26) zusammenarbeitende Druckrollen (27) mit vertikaler Drehachse angeordnet sind, deren jede jeweils um ein wenigstens der Aufstelltoleranz der Wechselaufbauten (6) entsprechendes Maß horizontal verschiebbar ist, und die jeweils durch einen fluidisch beaufschlagbaren Betätigungskolben (28) in eine mechanisch definierte, die exakte Zentrierlage der Ladeplattform (3) bestimmende Endstellung einfahrbar ist.

4. Güterwagen nach Anspruch 1,
**dadurch gekennzeichnet**,
daß die horizontale, an der Oberseite der Hubmittel (Luftfederbälge 5, Parallelogrammführung 11) angebrachte Schwimmführung (8) für die Ladeplattform (3) mittels zweier rechts und links am Wagenchassis (2) angelenkter, kinematisch und lagemäßig übereinstimmender, untereinander starr verbundener (Verbindungswelle 12) Parallelogrammführungen (11) allseits verkantungssicher geführt ist.

5. Güterwagen nach Anspruch 1,
**dadurch gekennzeichnet**,
daß die für die Betätigung der Hubmittel (Luftfederbälge 5, Parallelogrammführung 11) dienenden, sich unterseitig am Wagenchassis (2) abstützenden Luftfederbälge (5) oberseitig in hubübersetzender Weise mittelbar an der horizontalen Schwimmführung (8) für die Ladeplattform (3) angreifen.

6. Güterwagen nach Anspruch 5,
**dadurch gekennzeichnet**,
daß die Luftfederbälge (5) über die Schwingen (13) der Parallelogrammführung (11) hubübersetzend an der Schwimmführung (8) angreifen und mit ihrer Oberseite an der Unterseite der Schwingen (13) der Parallelogrammführung (8) abgestützt sind.

7. Güterwagen nach Anspruch 1,
**dadurch gekennzeichnet**,
daß das Wagenchassis (2) durch einen rohrförmigen, entlang der Längsmittelinie des Güterwagens (1) über dessen Länge durchlaufenden, im Querschnitt vorzugsweise rechteckigen Zentralträger (14) gebildet ist, an welchen rechts und links Konsolen (15) oder Querträger (16) zur Abstützung von Aufbauteilen des Güterwagens (1) oder zur Auflagerung des Wagenchassis (2) auf den Drehgestellen (24) oder Wagenachsen angesetzt sind und an welchen ferner endseitig jeweils Querträger (17) zur Halterung der Kupplungspuffer (23) des Güterwagens (1) angebracht sind.

8. Güterwagen nach Anspruch 4 und 7,
**dadurch gekennzeichnet**,
daß die beiden Parallelogrammführungen (11) zu beiden Seiten des Zentralträgers (14) angelenkt sind.

9. Güterwagen nach Anspruch 1,
**dadurch gekennzeichnet**,
daß die Schwimmführung (8) zum einen durch eine oberseitig an den Hubmitteln (Luftfederbälge 5, Parallelogrammführung 11) gehalterte einheitliche Führungsplatte (18) oder durch mehrere, in einer einheitlichen Ebene gehalterte Führungsplatten (18) und zum anderen durch an der Unterseite der Ladeplattform (3) angebrachte, auf der/den Führungsplatte(n) (18) allseits horizontal verschieb- oder verschwenkbaren Stützplatte(n) (19) gebildet ist.

10. Güterwagen nach Anspruch 9,
**dadurch gekennzeichnet**,
daß in die Oberseite der Führungsplatte(n) (18) ortsfest mehrere gleichmäßig verteilt angeordnete Wälzkugeln (20) eingelassen sind, die die Führungsplatte(n) (18) geringfügig überragen, wobei die Wälzkugeln (20) ihrerseits jeweils leichtgängig, vorzugsweise mittels kleinerer Wälzkugeln, und abgedichtet in einem Lagergehäuse (21) allseits beweglich gelagert sind.

11. Güterwagen nach Anspruch 1,
**dadurch gekennzeichnet**,
daß die beiden in horizontalem Abstand zueinander an der Ladeplattform (3) bzw. am Wagenchassis (2) angeordneten Paare von Zentrierelementen - Zentrierzapfen (10) und Zentriertrichter (9) - im Bereich der beiden endseitigen Querseiten der Ladeplattform (3) derart außermittig angeordnet sind, daß sie diagonal über die Plattform-Mitte hinweg einander gegenüber liegen.

12. Güterwagen nach Anspruch 1,
**dadurch gekennzeichnet,**
daß die Ladeplattform (3) mit ersten Indexierungs- und Verriegelungsmitteln (22) zum gegenseitigen transportsicheren Verriegeln der Ladeplattform (3) mit dem aufzunehmenden Wechselaufbau - auch gegen Abheben oder Kippen des Wechselaufbaues (6) - versehen ist, die mit denjenigen unterseitigen Gegen-Indexierungs- und Verriegelungsmitteln an den Wechselaufbauten (6) zusammenwirken, die auch zum Indexieren und Verriegeln der Wechselaufbauten auf den Lastkraftwagen verwendet werden und daß an der Ladeplattform (3) sowie am Wagenchassis (2) weitere Mittel zum gegenseitigen transportsicheren Verriegeln der Ladeplattform (3) am Wagenchassis (2) auch gegen Abheben oder Kippen der Ladeplattform (3) vorgesehen sind.

13. Güterwagen nach Anspruch 1,
**dadurch gekennzeichnet,**
daß auf dem Wagenchassis (2) des Güterwagens (1) hintereinander zwei Ladeplattformen (3) angeordnet sind, die mittels jeweils gesonderter Hubmittel (Luftfederbälge 5, Parallelogrammführung 11) für sich heb- und senkbar und mittels jeweils gesonderter Schwimmführungen (8) horizontal auf den Hubmitteln (Luftfederbälge 5, Parallelogrammführung 11) verschiebbar sind.

## Claims

1. A rail-mounted freight wagon (1) for long distance combined rail/road freight haulage, in which
- the freight wagon (1) comprises a sideless loading platform (3) for the secure-transit accommodation of an interchangeable superstructure (6) for lorries which is standing on four integrated stilts (4) symmetrically over the tracks (25) at platform truck height,
- the freight wagon (1) further comprises inboard elevating means with which an interchangeable superstructure (6) can be raised and lowered by a height of lift and preferably by at least 40 cm,
- the railway loading gauge of the empty freight wagon (1) over its entire length and when the hoisting means are lowered is smaller in height and width - but less so in the height direction by less than the aforesaid height of lift - than the railway clearance profile under the interchangeable superstructure (6) which is set down over the tracks (25),
- whereby, by virtue of horizontal manoeuvrability in the longitudinal and transverse directions, the interchangeable superstructure (6), once received and in the raised condition, can be aligned in relation to the longitudinal median and transverse axes of the freight wagon with indexing precision in respect of the wagon chassis (2),
characterised in that
- the loading platform (3) which, in respect of the wagon chassis (2) is constructed as a separate part adapted for movement in relation to the said chassis (2) can be raised and lowered by means of inboard elevating means,
- the inboard elevating means are, at the top, connected via a horizontal floating guide (8) for horizontal movement with the loading platform (3) in three degrees of freedom of movement, whereby the floating guide (8) is so constructed that a
- displacement of the loading platform (3) in the longitudinal and transverse direction by in each case an amount which corresponds to the switching tolerance of the interchangeable super-structure (6) of the tracks (25) and a pivoting of the loading platform (3) about a vertical axis within the scope of the amount of displacement in any desired combinations of the three aforementioned movements are made possible, and
- whereby there are on the loading platform (3) and on the wagon chassis (2) during or after lowering of the loading platform (3) means which come into action for the power-assisted centring of the loading platform (3) which is under load and in relation to the wagon chassis (1) in the longitudinal and transverse directions.

2. A freight wagon according to claim 1, characterised in that as a means of power-assisted and automatic centring during lowering of the loading platform (3) there are on the loading platform (3) and on the wagon chassis (2), spaced apart from one another in the horizontal direction, at least two centringly interengaging pairs of vertically aligned centring elements - centring spigots (10) and centring cups (9), the opening in the centring cups (9) being larger than the amount of displacement of the loading platform (3) in respect of the elevating means (air spring bellows 5, parallelogram guide 11) and whereby the centring spigots (10), in the raised state of the loading platform (3), have their tips axially in the region of the greatest inside diameter of the centring cups (9) and in the lowered state of the loading platform (3) axially outside the smallest inside diameter of the centring cups (9).

3. A freight wagon according to claim 1, characterised in that as means for the power-assisted centring of the virtually completely lowered loading platform (3) which is still however resting movably on the floating guide, there are on the loading platform, extending parallel with the outsides of the platform (3), preferably in the corner areas compression webs (26) and on the wagon chassis (2) and co-operating with the compression webs (26), pressure rollers (27) with a vertical axis of rotation and each of which is adapted for horizontal displacement by an amount corresponding at least to the switching tolerance of the inter-changeable superstructure (6) and which can be moved into a final position which is mechanically defined and which determines the precisely centred position of the load platform (3) by a fluid-operated actuating piston (28).

4. A freight wagon according to claim 1, characterised in that the horizontal floating guide (8) for the load platform (3) and which is provided on the top of the elevating means (air spring bellows 5, parallelogram guide 11) is guided by means of two parallelogram guides (11) in universally tilt-proof manner, the parallelogram guides being connected rigidly to each other by a connecting shaft (12) and being kinematically and in a positionally concordant relationship and articulated on the right and left of the wagon chassis (2).

5. A freight wagon according to claim 1, characterised in that the air spring bellows (5) which serve to activate the elevating means (air spring bellows 5, parallelogram guide 11) are on their under side supported on the wagon chassis (2) while on the top, in a travel-translating manner, they indirectly engage the horizontal floating guide (8) for the load platform (3).

6. A freight wagon according to claim 5, characterised in that via the springing arms (13) of the parallelogram guide (11), the air spring bellows (3) engage the floating guide (8) in lift-translating manner, their upper side being supported on the under side of the swinging arms (13) of the parallelogram guide (8).

7. A freight wagon according to claim 1, characterised in that the wagon chassis (2) is formed by a tubular cross-sectionally preferably rectangular central member (14) extending along the length and on the longitudinal central line of the freight wagon (1) and on the right and left of which there are consoles (15) or cross-members (16) for supporting superstructure parts of the freight wagon (1) or for mounting the wagon chassis (2) on the bogies (24) or wagon axles and on which there are furthermore, at the ends, cross-members (17) for supporting the coupling buffers (23) of the freight wagon (1).

8. A freight wagon according to claims 4 and 7, characterised in that the two parallelogram guides (11) are articulated on both sides of the central member (14).

9. A freight wagon according to claim 1, characterised in that the floating guide (8) is formed on the one hand by a uniform guide plate (18) supported at the top by the elevating means (air spring bellows 5, parallelogram guide 11) or by a plurality of guide plates (18) supported in a uniform plane and, on the other, provided on the under side of the load platform (3), supporting plates adapted to displace or pivot the guide plate(s) (18) in all directions horizontally.

10. A freight wagon according to claim 9, characterised in that let into the top of the guide plate(s) (18) in fixed locations are a plurality of regularly distributed roller balls (20) which project slightly beyond the guide plate(s) (18), the roller balls (10) being respectively and in turn mounted for omnidirectional smooth movement preferably by means of smaller rolling balls and being sealed in a bearing housing (21).

11. A freight wagon according to claim 1, characterised in that the two pairs of centring elements - centring spigot (10) and centring cups (9) - disposed at a horizontal distance from one another on the load platform (3) or wagon chassis (2) are in the region of the two end transverse sides of the load platform (3), so eccentrically disposed that they are situated opposite each other diagonally across the centre of the platform.

12. A freight wagon according to claim 1, characterised in that the load platform (3) is provided with first indexing and locking means (22) for the reciprocal transit-secured interlocking of the load platform (3) and the interchangeable superstructure which is to be accommodated - secure also against the superstructure (6) being lifted off or tipping - and which co-operate with the mating indexing and interlocking means on the under side of the interchangeable superstructure (6) and which are also used for indexing and interlocking the superstructure on the lorry and in that on the load platform (3) and also on the wagon chassis (2) there are further means for the reciprocal transit-secure interlocking of the load platform (3) on the wagon chassis (2), also against the load platform (3) being lifted off or tipping.

13. A freight wagon according to claim 1, characterised in that on the wagon chassis (2) of the freight wagon (1) there are disposed one behind the other two load platforms (3) which can by means of separate elevating means (air spring bellows 5, parallelogram guide 11), be independently raised and lowed and by means of respectively separate floating guides (8), displaced horizontally on the elevating means (air spring bellows 5, parallelogram guide 11).

## Revendications

1. Wagon de marchandises (1) lié au rail pour le transport combiné rail/route de marchandises, dans lequel
- le wagon de marchandises (1) présente une plate-forme de chargement (3) sans ridelles pour recevoir, avec sécurité de transport, un caisson amovible (6) pour camion déposé sur quatre béquilles intégrées (4), à la hauteur du chargement sur camion, symétriquement au-dessus des rails (25),
- le wagon de marchandises (1) présente en outre des moyens de levage qui lui appartiennent et à l'aide desquels un caisson amovible (6) peut être soulevé et abaissé d'une certaine hauteur de levée - de préférence d'au moins environ 40 cm,
- le gabarit du wagon de marchandises vide (1) est, sur toute sa longueur, les moyens de levage étant abaissés, inférieur en hauteur et en largeur - toutefois, dans le sens de la hauteur, inférieur de moins que la hauteur de levage mentionnée - au gabarit de passage sous le caisson amovible (6), déposé au-dessus des rails (25),
- dans lequel, grâce à des mobilités dans le plan horizontal, dans le sens longitudinal et dans le sens transversal, le caisson amovible (6) en cours de réception est, à l'état soulevé, orientable par rapport à l'axe longitudinal et par rapport à l'axe transversal du wagon de marchandises pour donner une précision de repérage par rapport au châssis du wagon (2),
caractérisé par le fait que
la plate-forme de chargement (3) conçue spéciale par rapport au châssis du wagon (2), formant une partie mobile par rapport à lui, peut être soulevée et abaissée grâce aux moyens de levage appartenant au wagon,
- les moyens de levage appartenant au wagon sont, du côté supérieur, liés à la plate-forme de chargement (3) par l'intermédiaire d'un guidage flottant horizontal (8) avec mobilité, dans le plan horizontal, dans les trois degrés de liberté du mouvement, le guidage flottant ((8) étant conçu de façon que soient permis une translation de la plate-forme de chargement (3) selon la direction longitudinale et selon la direction transversale de, pour chacune, une valeur de la translation correspondant à la tolérance de dépose des caissons amovibles (6) au-dessus des rails (5) ainsi qu'un pivotement de la plate-forme de chargement (3) autour d'un axe vertical dans la limite de la valeur du déplacement dans des combinaisons quelconques des trois mouvements mentionnés et
- dans le cas duquel sont disposés, sur la plate-forme de chargement (3) et sur le châssis du wagon (2), des moyens, qui viennent en oeuvre pendant ou après l'abaissement de la plate-forme de chargement (3), pour le centrage assisté, par rapport au châssis du wagon (1), selon la direction longitudinale et selon la direction transversale, de la plate-forme de chargement (3) alors sous charge.

2. Wagon de marchandises selon la revendication 1,
caractérisé
par le fait que, comme moyens pour le centrage assisté et automatique pendant l'abaissement de la plate-forme de chargement (3), sont disposés, sur la plate-forme de chargement (3) et sur le châssis du wagon (2) à une certaine distance horizontale les uns des autres, au moins deux paires, venant en prise l'un avec l'autre en réalisant le centrage, d'éléments de centrage - broche de centrage (10) et entonnoir de centrage (9) - orientés verticalement, l'ouverture de l'entonnoir de centrage (9) étant supérieure à la valeur du déplacement de la plate-forme de chargement (3) par rapport aux moyens de levage (coussins pneumatiques 5, guidage à parallélogramme 11) et les broches de centrage (10) se situant, par leur pointe, à l'état soulevé de la plate-forme de chargement (3), axialement dans la zone du plus grand diamètre d'ouverture de l'entonnoir de centrage (2) et, à l'état abaissé de la plate-forme de chargement (3), axialement en deçà du plus petit diamètre d'ouverture de l'entonnoir de centrage (9).

3. Wagon de marchandises selon la revendication 1,
caractérisé
par le fait que, comme moyens pour le centrage assisté de la plate-forme de chargement (3), presque complètement abaissée, mais reposant encore, mobile, sur le guidage flottant, sont disposés, sur cette plate-forme de chargement (3), des guides (26) orientés parallèlement aux côtés extérieur de la plate-forme de chargement (3) et de préférence disposés dans un angle, et, sur le châssis du wagon (2), des galets (27) à manoeuvre pneumatique et à axe de rotation vertical, collaborant avec les guides (26), galets dont chacun peut se déplacer dans le plan horizontal d'une valeur correspondant au moins à la tolérance de dépose des caissons amovibles (6), et dont chacun peut être amené, par un piston de manoeuvre (28) sous pression d'un fluide, dans une position finale mécaniquement définie et définissant la position de centrage exacte de la plate-forme de chargement (3).

4. Wagon de marchandises selon la revendication 1,
caractérisé
par le fait que le guidage flottant (8), dans le plan horizontal, pour la plate-forme de chargement (3), rapporté sur le côté supérieur des moyens de levage (coussins pneumatiques 5 , guidage à parallélogramme 11), est guidé, sans pouvoir pencher d'aucun côté, au moyen de deux guidages à parallélogramme (11) articulés à droite et à gauche au châssis du wagon (2), concordant au point de vue cinématique et position, rigidement reliés l'un à l'autre (arbre de liaison 12).

5. Wagon de marchandises selon la revendication 1,
caractérisé
par le fait que les coussins pneumatiques (5) qui servent à la manoeuvre des moyens de levage (coussins pneumatiques 5, guidage à parallélogramme 11), et s'appuient, du côté inférieur, contre le châssis du wagon (2), interviennent indirectement, avec conversion de la hauteur de levée, sur le guidage flottant (8), dans le plan horizontal, pour la plate-forme de chargement (3).

6. Wagon de marchandises selon la revendication 5,
caractérisé
par le fait que les coussins pneumatiques (5) interviennent, par l'intermédiaire des bielles oscillantes (16) de guidage du parallélogramme (11) et avec conversion de la hauteur de levée, sur le guidage flottant (8) et, par leur côté supérieur, s'appuient contre le côté intérieur des bielles oscillantes (13) du guidage à parallélogramme (8)??.

7. Wagon de marchandises selon la revendication 1,
caractérisé
par le fait que le châssis du wagon (2) est formé d'une poutre centrale tubulaire (14), de préférence de section rectangulaire, courant le long de l'axe longitudinal du wagon de marchandises (1) et sur toute sa longueur, poutre sur laquelle sont rapportées à droite et à gauche des consoles (15) ou des traverses (16) pour soutenir des parties de structure de wagon de marchandises (1) ou pour poser le châssis du wagon (2) sur les bogies (24) ou sur les essieux et sur lesquelles sont en outre rapportées, à chaque extrémité, des traverses (17) pour tenir les tampons (23) des wagons de marchandises (1).

8. Wagon de marchandises selon les revendications 4 et 7,
caractérisé
par le fait que les deux guidages à parallélogramme (11) sont articulés des deux côtés de la poutre centrale (14).

9. Wagon de marchandises selon la revendication 1,
caractérisé
par le fait que le guidage flottant (8) est formé d'une part par une unique plaque de guidage (18) tenue du côté supérieur, sur les moyens de levage (coussins pneumatiques 5, guidage à parallélogramme 11), ou par plusieurs plaques de guidage (8) tenues dans un même plan, et, d'autre part, par une ou des plaques d'appui (19) rapportées du côté inférieur de la plate-forme de chargement (3) et pouvant exécuter une translation ou un pivotement dans le plan horizontal, de tous les côtés, sur la ou les plaques de guidage (18).

10. Wagon de marchandises selon la revendication 9,
caractérisé
par le fait que dans la face supérieure de la ou des plaques de guidage (8) sont logées, fixes en position, plusieurs billes de roulement (20) disposées régulièrement réparties, qui débordent légèrement de la ou des plaques de guidage (18), les billes de roulement (20) étant, de leur côté, chacune logées avec liberté de mouvement de tous côtés, de préférence au moyen de billes plus petites, et avec étanchéité, dans une boîte (21) formant portée.

11. Wagon de marchandises selon la revendication 1,
caractérisé
par le fait que les deux paires d'éléments de centrage - broche de centrage (10) et entonnoir de centrage (9) - disposées à une certaine distance horizontale l'une de l'autre sur la plate-forme de chargement (3) ou sur le châssis du wagon (2) sont disposées, au voisinage des deux petits côtés d'extrémité de la plate-forme de chargement (3), en dehors de l'axe, de façon à se situer diagonalement en face l'une de l'autre par rapport à l'axe de la plate-forme.

12. Wagon de marchandises selon la revendication 1,
caractérisé
par le fait que la plate-forme de chargement (3) est munie de premiers moyens de repérage et de verrouillage (22) pour le verrouillage mutuel, avec sécurité du transport, de la plate-forme de chargement (3) et du caisson amovible à recevoir,
- avec sécurité également à l'égard d'un soulèvement ou d'un basculement du caisson amovible (6) -, moyens qui collaborent avec les moyens de contre-repérage et de verrouillage qui sont prévus, du côté inférieur, sur les caissons amovibles (6) et sont également employés pour le repérage et le verrouillage des caissons amovibles sur les camions, et par le fait que sur la plate-forme de chargement (3) ainsi que sur le châssis du wagon (2) sont prévus d'autres moyens pour verrouiller mutuellement, avec sécurité du transport, la plate-forme de chargement (3) sur le châssis du wagon (2), avec sécurité également à l'égard d'un soulèvement ou d'un basculement de plate-forme de chargement (3).

13. Wagon de marchandises selon la revendication 1,
caractérisé
par le fait que sur le châssis (2) du wagon de marchandises (1), sont disposées, l'une derrière l'autre, deux plates-formes de chargement (3) qui peuvent être, indépendamment l'une de l'autre, soulevées et abaissées grâce à des moyens de levage particuliers pour chacune (coussins pneumatiques 5, guidage à parallélogramme 11) et peuvent être déplacées dans le plan horizontal, sur les moyens de levage (coussins pneumatiques 5, guidage à parallélogramme 11) au moyen de guidages flottants (8) particuliers pour chacune.
